# EUROPEAN PATENT SPECIFICATION

(11) **EP 4 576 370 B1**
(45) Date of publication and mention of the grant of the patent: **07.10.2026**
(21) Application number: 24212029.3
(22) Date of filing: 11.11.2024
(51) Int. Cl.: H01M 50/289, H01M 50/262, H01M 50/204, H01M 50/244, H01M 50/367, H01M 50/293

(54) **BATTERY CASE, BATTERY PACK, AND ELECTRIC-POWERED APPARATUS**
BATTERIEGEHÄUSE, BATTERIEPACK UND ELEKTRISCH ANGETRIEBENE VORRICHTUNG
BOÎTIER DE BATTERIE, BLOC-BATTERIE ET APPAREIL ÉLECTRIQUE

(30) Priority: 22.12.2023 CN 202311787985; 22.12.2023 CN 202323528989 U
(43) Date of publication of application: 25.06.2025
(73) Proprietor: Eve Energy Co., Ltd., Huizhou, Guangdong 516006 (CN)
(72) Inventor: HUANG, Weicai, Huizhou Guangdong (CN)
(74) Representative: Herrero & Asociados, S.L.

(56) References cited:
- EP-A1- 4 254 633
- CN-A- 116 093 517
- CN-U- 217 768 635
- US-A1- 2022 123 427

## Description

### TECHNICAL FIELD

The present disclosure relates to the field of batteries, and in particular to a battery case, a battery pack, and an electric-powered apparatus.

### BACKGROUND

A battery pack is a unit formed by a plurality of battery modules being assembled to each other and is configured to store and supply electrical energy. The battery pack is a higher-level component of a battery system. The battery pack is usually formed by one or more battery modules, connectors, a battery management system, a heat dissipation system, electrical interfaces, and a housing. Battery packs are widely used in electric vehicles, hybrid vehicles and other vehicles. The battery pack is an essential component of an electric energy system and provides a higher level of electrical energy storage and management to meet requirements of various applications.

EP 4254633 A1 provides a battery mod- ule and an electric vehicle. The battery module includes a case, a longitudinal beam, and a tray. The case is pro- vided with exhaust ports. The longitudinal beam is dis- posed in the case and abuts against a bottom surface of the case to partition accommodating areas in the case on both sides of the longitudinal beam along a width direction. The tray is disposed in one of the accommodating areas and is configured to install a battery cell. A through hole opposite to an end of the battery cell is defined on the tray, the tray is spaced from the bottom surface of the case to define a pressure relief cavity, the through hole and the exhaust ports are respectively communicated with the pressure relief cavity. The accommodating areas located on both sides of the longitudinal beam in the case are partitioned by the longitudinal beams, so that gas and ejections discharged from the thermal run- away battery cell will not contact the battery cell in the accommodating area on another side, so as to avoid that the accommodating area on the other side is affected to cause thermal runaway of the battery cells in the whole case.

CN217768635U provides a battery tray, which comprises a frame, the frame comprises two supports spaced apart and symmetrically arranged along the Y direction, each support extending along the X direction and being provided with a first sliding groove extending along the X direction; and a placement assembly comprising a plurality of brackets spaced apart along the X direction, each bracket extending along the Y direction, both ends of each bracket being detachably connected to the two supports and in sliding fit with the two first sliding grooves; wherein a plurality of battery placement spaces that are sequentially distributed along the Y direction and adjustable along the Y direction are formed between any two adjacent brackets.

### SUMMARY

In a first aspect, and according to claim 1, a battery case is provided and includes: a battery tray bracket; a case body; and a slider detachment member. The case body has a case outer frame and a support beam. The case outer frame defines a battery compartment inside the case outer frame. The case outer frame and/or the support beam defines with an anti-detachment slide slot. The support beam is fixedly connected to the case outer frame. The slider detachment member is slidably arranged in the anti-detachment slide slot. An anti-detachment snap portion of the slider detachment member is configured to constrain and fix the battery tray bracket to the case outer frame and the support beam, and the battery tray bracket defines a positioning and anti-detachment slot, the anti-detachment snap portion of the slider detachment member is snapped into the positioning and anti-detachment slot.

In a second aspect, a battery pack is provided and includes the battery case as described in the above and a battery module, mounted and fixed to the battery tray bracket of the battery case.

In some embodiments, the battery module includes: a module positioning bracket and one or more cells. The one or more cells are evenly distributed having an equal interval; each of the one or more cells is inserted in the module positioning bracket, and each of the one or more cells is capable of exchanging heat with the pressure relief channel of the battery case.

In a third aspect, an electric-powered apparatus is provided and includes the battery pack as described in the above.

Taking advantages of mating between the slider detachment member and the anti-detachment slot of the case body, the tray bracket of the battery can be firmly fixed in the case body. The bolt in the art for securing and attaching is replaced. In this way, the technical problem of the battery pack being loosened and the battery having short-circuits and being on fire, caused by the bolt being threadedly failed, may be avoided, ensuring the battery pack to be used safely and stably. In addition, the case body of the battery case does not need to be processed to define holes to be arranged with rivet nuts. Therefore, methods of processing the battery case and the battery pack are simplified, the battery case and the battery pack can be processed and assembled more conveniently and efficiently.

### BRIEF DESCRIPTION OF THE DRAWINGS

FIG. 1 is a first partial assembling view of a battery case according to some embodiments of the present invention.
FIG. 2 is a second partial assembling view of the battery case according to some embodiments of the present invention.
FIG. 3 is a structural schematic view of a battery tray bracket in the battery case according to some embodiments of the present invention.
FIG. 4 is a view of a cross section of a support beam of the battery case according to some embodiments of the present invention.
FIG. 5 is a first structural schematic view of a slider detachment member in the battery case according to some embodiments of the present invention.
FIG. 6 is a second structural schematic view of the slider detachment member in the battery case according to some embodiments of the present invention.
FIG. 7 is a third structural schematic view of the slider detachment member in the battery case according to some embodiments of the present invention.
FIG. 8 is an assembled view of an entirety of a battery case arranged with the battery case according to some embodiments of the present invention.
FIG. 9 is a partial assembling view of the battery case arranged with the battery case according to some embodiments of the present invention.

Reference numerals in the drawings: 1- battery tray bracket, 11- tray body, 12- tray cavity, 13- tray support portion, 14- heat-dissipation and pressure-relief hole, 15- positioning and anti-detachment slot, 2- case body, 21- case outer frame, 211- outer cross frame, 212- outer vertical frame, 22- support beam, 23- battery compartment, 24- anti-detachment slide slot, 241- extension cavity, 25- weight reduction cavity, 26- cushioning embedding groove, 27-guide rib, 28-disassembling station, 3-slider detachment member, 31- anti-detachment snap portion, 32-slider body, 33-extension snap portion, 34-guide opening, 4-cell, 5-module positioning bracket, 6-elastic cushioning member.

### DETAILED DESCRIPTION

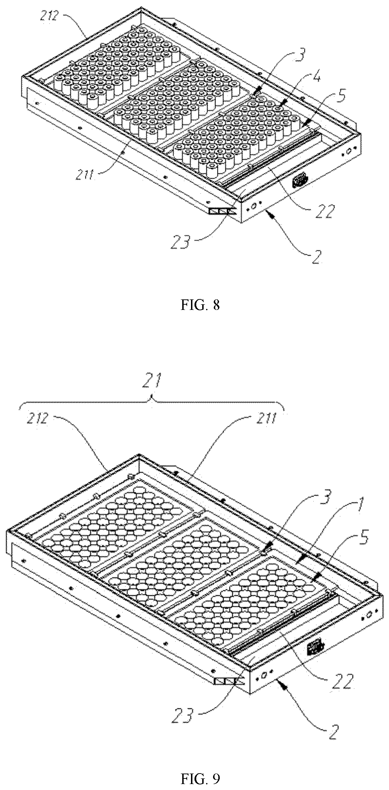

As shown in FIGS. 8 and 9, the present invention provides a battery pack including a battery case and a battery module. The battery module includes one or more cells 4. In some embodiments, each of the one or more cells 4 is a cylindrical battery. Each cell 4 has a positive-electrode end surface, a negative-electrode end surface, and an arc-shaped battery circumferential surface. The positive-electrode end surface and the negative-electrode end surface are respectively disposed on two opposite sides of the battery circumferential surface. A direction from the negative-electrode end surface towards the positive-electrode end surface is defined as a height direction of the cell 4. The one or more cells 4 are distributed having an equal interval. The one or more cells 4 are connected in series and in parallel to each other. When the one or more cells 4 are distributed having the equal interval, negative-electrode end surfaces of the one or more cells 4 are in a same plane, and the one or more cells 4 have a same height direction.

In order to ensure that the one or more cells 4 are assembled more stably and compactly, the battery module further includes a module positioning bracket 5, the module positioning bracket 5 is arranged with one or more assembling stations. Each of the one or more assembling stations is arranged correspondingly with a respective one of the one or more cells 4. A shape and a size of the assembling station matches a shape and a size of the respective cell 4, enabling each cell 4 to be inserted in the respective assembling station of the module positioning bracket 5.

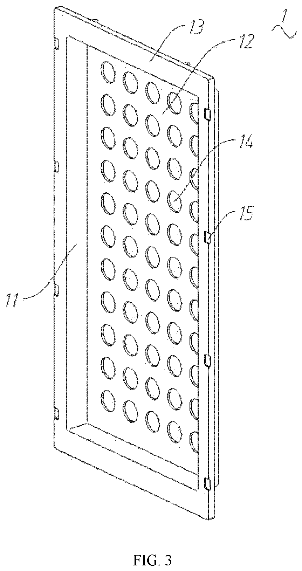

As shown in FIGS. 3 and 9, the battery case includes a battery tray bracket 1, the battery tray bracket 1 has a tray body 11, the tray body 11 defines a tray cavity 12 therein. The battery module is mounted and fixed to the tray cavity 12 of the battery tray bracket 1. In some embodiments, a side of the module positioning bracket 5 of the battery module abuts against a cavity wall of the tray cavity 12. In this way, the battery module can be securely fixed to the battery tray bracket 1. A side of the tray body 11 near an opening of the tray cavity 12 protrudes outwardly to form a tray support portion 13. The tray support portion 13 extends along a peripheral side of the tray body 11.

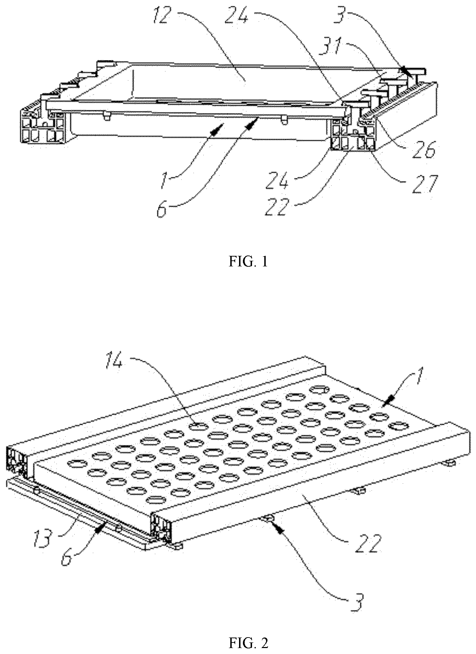

As shown in FIGS. 1, 3 and 9, the battery case further includes a case body 2 and a slider detachment member 3. The case body 2 has a case outer frame 21 and a support beam 22. The case outer frame 21 defines a battery compartment 23 therein. The support beam 22 is fixedly connected to the case outer frame 21.

Specifically, the case outer frame 21 includes a case bottom plate, two outer cross frames 211 opposite to each other, and two outer vertical frames 212 opposite to each other. The two outer vertical frames 212 are disposed between the two outer cross frames 211. Two ends of each outer vertical frame 212 are respectively fixedly connected to the two outer cross frames 211. The two outer cross frames 211 and the two outer vertical frames 212 are all fixedly connected to the case bottom plate. In addition, the case bottom plate, the two outer cross frames 211 and the two outer vertical frames 212 cooperatively define the battery compartment 23. In some embodiments, the support beam 22 is parallel to the outer vertical frames 212 and is fixedly connected to the outer cross frames 211. The fixed connection may be welded connection, snap connection, or combination of the welded connection and the snap connection.

As shown in FIG. 1, the support beam 22 defines an anti-detachment slide slot 24, located at a side of the support beam 22 near the battery compartment 23. The anti-detachment slide slot 24 extends along a length direction of the support beam 22. In some embodiments, the anti-detachment slide slot 24 extends through the support beam 22. The slider detachment member 3 is slidably arranged in the anti-detachment slide slot 24. An anti-detachment snap portion 31 of the slider detachment member 3 may constrain and fix the battery tray bracket 1 to the case outer frame 21 and the support beam 22. That is, during assembling the battery tray bracket 1 to the case body 2, the tray support portion 13 of the battery tray bracket 1 abuts against the case outer frame 21 and the support beam 22. The slider detachment member 3 is then slidably connected to the anti-detachment slide slot 24, and the anti-detachment snap portion 31 of the slider detachment member 3 is snapped to the tray support portion 13 of the battery tray bracket 1. In this way, the tray support portion 13 of the battery tray bracket 1 is tightly clamped between the support beam 22 and the anti-detachment snap portion 31 of the slider detachment member 3, such that the battery tray bracket 1 is completely constrained to the case body 2, and stable assembling between the battery tray bracket 1 and the case body 2 can be achieved. In order to ensure that two opposite sides of the battery tray bracket 1 receive forces uniformly, each of two support beams 22 acting on the two opposite sides of the battery tray bracket 1 is arranged with the slider detachment member 3, respectively. Of course, as shown in FIG. 9, when the battery tray bracket 1 is assembled near the outer vertical frame 212 of the case outer frame 21, one of the tray support portions 13 of the battery tray bracket 1 abuts against the outer vertical frame 212 of the case outer frame 21. In order to ensure that the two opposite sides of the battery tray bracket 1 receive forces uniformly, the outer vertical frame 212 of the case outer frame 21 is arranged with the anti-detachment slide slot 24, such that the tray support portion 13 that is subjected to the outer vertical frame 212 can be snapped and tightly clamped by the slider detachment members 3.

It should be noted that, the anti-detachment slide slot 24 is not limited to be arranged at the support beam 22 and the outer vertical frame 212 of the case outer frame 21. According to assembly requirements and design demands, positions and the number of the anti-detachment slide slots 24 arranged on the case body 2 can be adjusted. For example, in order to improve firmness and stability of assembling between the battery tray bracket 1 and the battery case, the anti-detachment slide slot 24 may further be arranged on the outer cross frame 211 of the case outer frame 21. In this way, each of the support beam 22, the outer cross frame 211 of the case outer frame 21, the outer vertical frame 212 of the case outer frame 21 is arranged with the anti-detachment slide slot 24. Therefore, the peripheral side of the battery tray bracket 1 can be snapped by one or more slider detachment members 3, and the battery tray bracket 1 is subjected to forces more balancedly.

Alternatively, the anti-detachment slide slot 24 is arranged only on the support beam 22 of the case body 2 or only on the case outer frame 21 of the case body 2 or arranged on the support beam 22 and the outer cross frame 211 of the case outer frame 21.

In summary, the slider detachment member 3 is arranged to restrain and fix the battery tray bracket 1 on the case outer frame 21 and the support beam 22. In this way, the technical problem of inconvenient disassembling and insecure assembling, caused by failure of threads of bolts and other fasteners having threaded structures, can be avoided; and in addition, it is ensured that the battery pack can be used stably and safely. Furthermore, a drilling process is simplified. An arrangement position of the slider detachment member 3 can be adjusted along a length extension direction of the anti-detachment slide slot 24; or the number of slider detachment members 3 can be increased or decreased in any case in the anti-detachment slide slot 24. Therefore, the battery case and the battery pack can be assembled more flexibly and conveniently.

It is expected that the anti-detachment slide slot 24 cooperates with the slider detachment member 3 to restrain and fix the battery tray bracket 1, and furthermore, a weight of the case body 2 and the battery box is reduced, such that the battery pack can be miniaturized. In order to reduce a weight of the support beam 22, a weight reduction cavity 25 may be defined in the support beam 22.

According to the invention, as shown in FIGS. 1 and 3, the battery tray bracket 1 defines a positioning and anti-detachment slot 15. Specifically, the positioning and anti-detachment slot 15 extends from a side edge of the tray support portion 13 towards the tray cavity 12. The anti-detachment snap portion 31 of the slider detachment member 3 is snapped into the positioning and anti-detachment slot 15. In some embodiments, one or more positioning and anti-detachment slots 15 are defined and are evenly distributed along an extension direction of the tray support portion 13.

In this way, the slider detachment member 3 is assembled to the anti-detachment slide slot 24 and slides along the length direction of the anti-detachment slide slot 24 until the anti-detachment snap portion 31 of the slider detachment member 3 is snap-fitted into the designated anti-detachment slot 15. In this way, positioning can be achieved rapidly, and the assembling is performed more efficiently and conveniently. In addition, after the anti-detachment snap portion 31 of the slider detachable member 3 is snap-fitted into the anti-detachment slot 15, the anti-detachment slot 15 can limit a translational displacement of the slider detachable member 3 along the length direction of the anti-detachment slide slot 24. In this way, in a case that the battery case and the battery pack is vibrating, the slider detachment member 3 is prevented from moving along the length direction of the anti-detachment slide slot 24, and assembling stability between the slider detachment member 3, the battery tray bracket 1 and the case body 2 is improved.

In some embodiments, as shown in FIGS. 1 and 2, the battery case further includes an elastic cushioning member 6. The elastic cushioning member 6 is disposed between the case body 2 and the battery tray bracket 1.

Specifically, the elastic cushioning member 6 may be made of silicone or a plastic material or a rubber material. Elastic performance of the elastic cushioning member 6 cushions an impact generated during the battery tray bracket 1 being assembled to the case body 2, preventing wear and noise caused by the battery tray bracket 1 and the case body 2 rigidly colliding with each other. In addition, the elastic performance of the elastic cushioning member 6 prevents collision and noise of the battery tray bracket 1 and the case body 2 due to vibration.

In addition, when a force is applied to the tray support portion 13 of the battery tray bracket 1 in a direction perpendicular to a top surface of the tray support portion 13, the elastic cushioning member 6 is excessively compressed, the battery module and the battery tray bracket 1 are temporarily lowered in the height direction, ensuring the slider detachable member 3 to translationally displace along the length direction of the anti-detachment slide slot 24. When the anti-detachment snap portion 31 of the slider detachment member 3 is embedded in the positioning and anti-detachment slot 15, and when the force applied to the battery tray bracket 1 is released, deformation of the elastic cushioning member 6 is restored, the battery module and the battery tray bracket 1 are reset to the initial height in the height direction, such that the anti-detachment snap portion 31 of the slider detachment member 3 is prevented from detaching from the positioning and anti-detachment slot 15.

It should be noted that when the anti-detachment snap portion 31 of the slider detachment member 3 acts directly on the tray support portion 13 of the battery tray bracket 1, the elastic cushioning member 6 can increase a pressure of the anti-detachment snap portion 31 applying on the tray support portion 13, such that friction between the anti-detachment snap portion 31 and the tray support portion 13 is increased, and stability of the assembling between the battery tray bracket 1 and the case body 2 is improved.

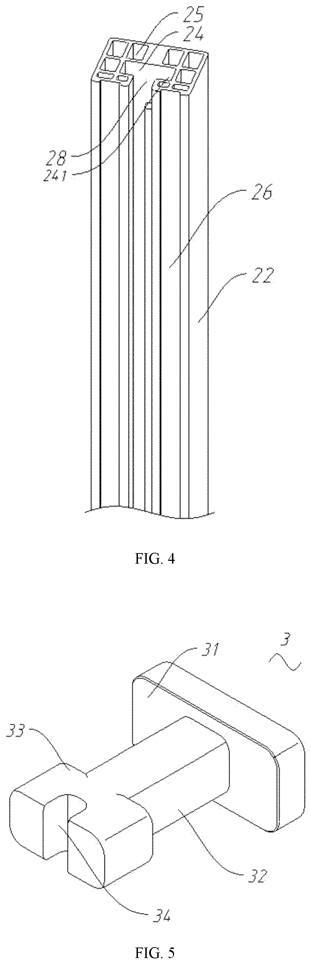

In some embodiments, as shown in FIGS. 1 and 4, a cushioning embedding groove 26 is defined in each of the case outer frame 21 and the support beam 22. The elastic cushioning member 6 is embedded inside the cushioning embedding groove 26. A width of the elastic cushioning member 6 fits a groove width of the cushioning embedding groove 26. Alternatively, the groove width of the cushioning embedding groove 26 is greater than the width of the elastic cushioning member 6. After the elastic cushioning member 6 is embedded inside the cushioning embedding groove 26, a portion of the elastic cushioning member 6 protrudes out of the cushioning embedding groove 26 and abuts against the battery tray bracket 1.

Specifically, a slot opening of the anti-detachment slide slot 24 in a slot depth direction is defined as a top opening of the anti-detachment slide slot 24; and a slot opening of the anti-detachment slide slot 24 in the length direction is defined as an end opening of the anti-detachment slide slot 24. As shown in FIG. 4, the cushioning embedding groove 26 is located at a side of the top opening of the anti-detachment slide slot 24, and the groove length direction of the cushioning embedding groove 26 is the same as the length direction of the anti-detachment slide slot 24. In order to enable the slider detachable member 3 to slide stably into the anti-detachment slide slot 24, a following embodiment is provided.

As shown in FIG. 4, the anti-detachment slide slot 24 has an extension cavity 241 extending in a width direction of the anti-detachment slide slot 24. That is, the anti-detachment slide slot 24 includes a slot body and the extension cavity 241. The extension cavity 241 is located on a side of the slot body near a bottom of the anti-detachment slide slot 24. The slot body and the extension cavity 241 are communicated with each other. When one extension cavity 241 is defined, the anti-detachment slide slot 24 is L-shaped. When two extension cavities 241 are defined, the two extension cavities 241 are located at two opposite sides of the slot body, and the anti-detachment slide slot 24 is inverted T-shaped.

Correspondingly, as shown in FIGS. 5, 6, and 7, the slider detachment member 3 further includes a slider body 32 and an extension snap portion 33. The extension snap portion 33 is protruding from the slider body 32 towards the extension cavity 241. The anti-detachment snap portion 31 and the extension snap portion 33 are respectively located on two opposite sides of the slider body 32. The anti-detachment snap portion 31 is fixedly connected to the slider body 32. In some embodiments, the anti-detachment snap portion 31, the slider body 32, and the extension snap portion 33 are integrally formed with each other as a one-piece structure.

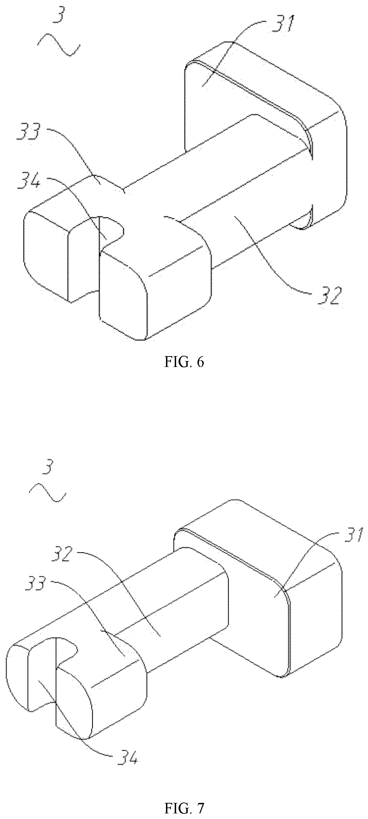

It should be noted that, as shown in FIG. 7, when one extension cavity 241 is defined, one extension snap portion 33 is correspondingly arranged, and the slider body 32 and the extension snap portion 33 cooperatively form an L shape. As shown in FIGS. 5 and 6, when two extension cavities 241 are defined, two extension snap portions 33 are arranged, the two extension snap portions 33 and the two slider bodies 32 cooperatively form an inverted T-shaped structure. Each extension snap portion 33 corresponds to a respective one extension cavity 241.

It should also be noted that, as shown in FIGS. 6 and 7, one anti-detachment snap portion 31 may be arranged, i.e., the anti-detachment snap portion 31 extends towards a side of the slider body 32, and the anti-detachment snap portion 31 and the slider body 32 cooperatively form the L shape. As shown in FIG. 5, two anti-detachment snap portions 31 may be arranged, and the two anti-detachment snap portions 31 respectively extend from two opposite sides of the slider body 32, and the two anti-detachment snap portions 31 and the slider body 32 cooperatively form a T shape.

In the above, the slider detachment member 3 can firmly and stably fix the battery tray bracket 1 and the battery module to the battery case, thread failure of the bolts after long-term use may be avoided. In addition, when the cell 4 in the battery module has thermal runaway, the technical problem of the battery module being lifted up by the atmospheric pressure, caused by an instantaneous increase in the pressure inside the battery case exceeding an axial bearing capacity of the bolt, can be avoided. A stable and solid structure and assembly for the battery module is provided, and the battery module and the battery pack can be used more stably and safely.

When the slider detachment member 3 is slidably arranged in the anti-detachment slide slot 24, a side of the slider body 32 of the slider detachment member 3 contacts an inner slot wall of the slot body of the anti-detachment slide slot 24. Alternatively, when a side of the extension snap portion 33 of the slider detachment member 3 contacts a cavity wall of the extension cavity 241 of the anti-detachment slide slot 24, the slider detachment member 3 may receive friction from a single side and is deflected, such that the anti-detachment snap portion 31 of the slider detachment member 3 may snap, in an inclined manner, to the tray support portion 13 of the battery tray bracket 1, a force application surface between the anti-detachment snap portion 31 and the tray support portion 13 is reduced; or the anti-detachment snap portion 31 cannot be embedded into the positioning and anti-detachment slot 15, leading to assembling failure.

According to an embodiment, as shown in FIGS. 1, 4, 5, 6, and 7, a slot bottom of the anti-detachment slide slot 24 is arranged with a guide rib 27. The guide rib 27 extends in the length direction of the anti-detachment slide slot 24. The slider detachment member 3 defines a guide opening 34 that is slidably mated with the guide rib 27. The guide opening 34 extends through the slider body 32 of the slider detachment member 3. In some embodiments, a shape and a size of the guide opening 34 match a shape and a size of the guide rib 27. Therefore, during the slider detachment member 3 sliding in the anti-detachment slide slot 24, sliding mating is formed between the guide opening 34 and the guide rib 27. That is, an inner side of the guide opening 34 and an outer surface of the guide rib 27 slidably contact each other, such that the slider detachment member 3 receives forces stably during sliding. In this way, the anti-detachment snap portion 31 is prevented from being deflected, and the slider detachment member 3 is stably guided to reciprocately slide in the length direction of the anti-detachment slide slot 24.

In some embodiments, as shown in FIG. 4, an end of the guide rib 27 near the end opening of the anti-detachment slide slot 24 is arranged with a disassembling station 28. A spacing is defined between the end of the guide rib 27 and the end opening of the anti-detachment slide slot 24, rather than the end of the guide rib 27 extending to reach the end opening of the anti-detachment slide slot 24.

In this way, after the slider detachment member 3 is assembled inside the anti-detachment slide slot 24, the slider detachment member 3 may be deflected/rotated in the disassembling station 28, such that a mounting angle of the slider detachment member 3 can be adjusted prior to sliding. That is, after the slider detachment member 3 is placed into the anti-detachment slide slot 24 from the top opening of the anti-detachment slide slot 24, the slider detachment member 3 is deflected by a certain angle to enable the guide opening 34 of the slider detachment member 3 to be aligned with the guide rib 27 in the anti-detachment slide slot 24. At this moment, the extension snap portion 33 of the slider detachment member 3 is completely snapped to the extension cavity 241 of the anti-detachment slide slot 24. Ultimately, it is only necessary to apply a force to the slider detachment member 3 to enable the slider detachment member 3 to translate in the length direction of the anti-detachment slide slot 24, and that is, the guide notch 34 is slidably mated to the guide rib 27.

The cell 4 of the battery module generates a large amount of heat after a long-term use, and when any cell 4 of the battery module has the thermal runaway, the cell 4 having the thermal runaway may release high temperature hot air and high temperature substances. In order to avoid the high temperature hot air and the high temperature substances from spreading in the battery case/the battery pack, the present invention further provides following embodiments.

Specifically, as shown in FIGS. 2 and 3, the battery tray bracket 1, the case outer frame 21, and the support beam 22 cooperatively define a pressure relief channel. That is, when the tray support portion 13 of the battery tray bracket 1 abuts against the support beam 22, a spacing is defined between the battery tray bracket 1 and a bottom plate of the case outer frame 21. In this way, the battery tray bracket 1, the support beam 22, and the bottom plate of the case outer frame 21 cooperatively define the pressure relief channel; and/or the battery tray bracket 1, the support beam 22, the bottom plate of the case outer frame 21, and the outer vertical frame 212 cooperatively define the pressure relief channel.

In some embodiments, a frame pressure relief chamber is defined in the case outer frame 21, a side wall of the case outer frame 21 defines a communication port. One or more communication ports may be defined. The pressure relief channel is communicated to the frame pressure relief chamber through at least one of the one or more communication ports. A pressure relief valve is arranged on the case outer frame 21. The tray body 11 of the battery tray bracket 1 defines a plurality of heat-dissipation and pressure-relief holes 14. Each battery cell 4 is in correspondence with a respective one of the plurality of heat-dissipation and pressure-relief holes 14.

In this way, the heat released by each cell 4 in the battery module or the high temperature hot air and high temperature substances released due to the thermal runaway can be quickly diffused into the pressure relief channel through the corresponding heat-dissipation and pressure-relief holes 14. Therefore, the heat and flowing air are guided, by the pressure relief channel, to the frame pressure relief chamber of the case outer frame 21 and can be ultimately discharged from the pressure relief valve. In this way, the heat or the hot air released from the cell 4 can be timely eliminated, heat spreading of the heat, due to a large amount of heat being accumulated in the battery case, can be avoided, such that the safety of the battery pack is improved.

According to structures and connections of the battery pack, the present disclosure further provides an electric-powered apparatus arranged with an apparatus using electric power. The electric-powered apparatus may be a transportation means, such as an electric vehicle, an electric cruise ship, an electric bicycle, and so on; or may be an industrial device, such as a handheld drill, an electric wrench, an electric bolt cutter, and so on; or may be an electric-powered device for daily life, such as an electric toy, a game console, a laptop computer, and so on.

## Claims

1. A battery case, **characterized by** comprising.
a battery tray bracket (1);
a case body (2), wherein the case body (2) has a case outer frame (21) and a support beam (22), the case outer frame (21) defines a battery compartment (23) inside the case outer frame (21), the case outer frame (21) and/or the support beam (22) defines with an anti-detachment slide slot (24), the support beam (22) is fixedly connected to the case outer frame (21); and
a slider detachment member (3), wherein the slider detachment member (3) is slidably arranged in the anti-detachment slide slot (24), and an anti-detachment snap portion (31) of the slider detachment member (3) is configured to constrain and fix the battery tray bracket (1) to the case outer frame (21) and the support beam (22);
wherein, the battery tray bracket (1) defines a positioning and anti-detachment slot (15); the anti-detachment snap portion (31) of the slider detachment member (3) is snapped into the positioning and anti-detachment slot (15).

2. The battery case according to claim 1, wherein, a slot bottom of the anti-detachment slide slot (24) is arranged with a guide rib (27); the guide rib (27) extends in a length direction of the anti-detachment slide slot (24); the slider detachment member (3) defines a guide opening (34) that is slidably mated with the guide rib (27); and an end of the guide rib (27) near an end opening of the anti-detachment slide slot (24) is arranged with a disassembling station (28).

3. The battery case according to claim 1 or 2, wherein, the anti-detachment slide slot (24) has an extension cavity (241) extending in a width direction of the anti-detachment slide slot (24); the slider detachment member (3) further comprises a slider body (32) and an extension snap portion (33); the extension snap portion (33) is protruding from the slider body (32) towards the extension cavity (241); the anti-detachment snap portion (31) is fixedly connected to the slider body (32).

4. The battery case according to claim 1 or 2, further comprising an elastic cushioning member (6); wherein the elastic cushioning member (6) is disposed between the case body (2) and the battery tray bracket (1).

5. The battery case according to claim 4, wherein, a cushioning embedding groove (26) is defined in each of the case outer frame (21) and the support beam (22); the elastic cushioning member (6) is embedded inside the cushioning embedding groove (26).

6. The battery case according to claim 1 or 2, wherein, the battery tray bracket (1), the case outer frame (21), and the support beam (22) cooperatively define a pressure relief channel; a frame pressure relief chamber is defined in the case outer frame (21); a side wall of the case outer frame (21) defines at least one communication port; the pressure relief channel is communicated to the frame pressure relief chamber through the at least one communication port; a pressure relief valve is arranged on the case outer frame (21).

7. A battery pack, **characterized by** comprising:
the battery case according to any one of claims 1 to 6; and
a battery module, mounted and fixed to the battery tray bracket (1) of the battery case.

8. The battery pack according to claim 7, wherein, the battery module comprises:
a module positioning bracket (5);
one or more cells (4), wherein the one or more cells (4) are evenly distributed having an equal interval; each of the one or more cells (4) is inserted in the module positioning bracket (5), and each of the one or more cells (4) is capable of exchanging heat with the pressure relief channel of the battery case.

9. An electric-powered apparatus, **characterized by** comprising the battery pack according to claim 7 or 8.

## Patentansprüche

1. Ein Batteriegehäuse, **dadurch gekennzeichnet, dass** es Folgendes umfasst:
eine Batteriewannenhalterung (1);
einen Gehäusekörper (2), wobei der Gehäusekörper (2) einen Gehäuseaußenrahmen (21) und einen Stützträger (22) aufweist, wobei der Gehäuseaußenrahmen (21) innerhalb des Gehäuseaußenrahmens (21) ein Batteriefach (23) begrenzt, wobei der Gehäuseaußenrahmen (21) und/oder der Stützträger (22) eine Schiebenut zur Verhinderung des Lösens (24) begrenzt, wobei der Stützträger (22) fest mit dem Gehäuseaußenrahmen (21) verbunden ist; und
einen Löseschieber (3), wobei der Löseschieber (3) verschiebbar in der Schiebenut zur Verhinderung des Lösens (24) angeordnet ist und ein Rastabschnitt (31) des Löseschiebers (3) dazu ausgebildet ist, die Batteriewannenhalterung (1) an dem Gehäuseaußenrahmen (21) und dem Stützträger (22) zu halten und zu befestigen;
wobei die Batteriewannenhalterung (1) eine Positionierungs- und Haltenut (15) begrenzt; wobei der Rastabschnitt (31) des Löseschiebers (3) in die Positionierungs- und Haltenut (15) eingerastet ist.

2. Das Batteriegehäuse gemäß Anspruch 1, wobei ein Nutgrund der Schiebenut zur Verhinderung des Lösens (24) mit einer Führungsrippe (27) versehen ist; sich die Führungsrippe (27) in einer Längsrichtung der Schiebenut zur Verhinderung des Lösens (24) erstreckt; der Löseschieber (3) eine Führungsöffnung (34) begrenzt, die verschiebbar mit der Führungsrippe (27) in Eingriff steht; und ein nahe einer Endöffnung der Schiebenut zur Verhinderung des Lösens (24) gelegenes Ende der Führungsrippe (27) mit einer Demontageposition (28) versehen ist.

3. Das Batteriegehäuse gemäß Anspruch 1 oder 2, wobei die Schiebenut zur Verhinderung des Lösens (24) eine Erweiterungsausnehmung (241) aufweist, die sich in einer Breitenrichtung der Schiebenut zur Verhinderung des Lösens (24) erstreckt; der Löseschieber (3) ferner einen Schieberkörper (32) und einen Erweiterungsrastabschnitt (33) umfasst; der Erweiterungsrastabschnitt (33) von dem Schieberkörper (32) in Richtung der Erweiterungsausnehmung (241) vorsteht; und der Rastabschnitt (31) fest mit dem Schieberkörper (32) verbunden ist.

4. Das Batteriegehäuse gemäß Anspruch 1 oder 2, ferner umfassend ein elastisches Dämpfungselement (6), wobei das elastische Dämpfungselement (6) zwischen dem Gehäusekörper (2) und der Batteriewannenhalterung (1) angeordnet ist.

5. Das Batteriegehäuse gemäß Anspruch 4, wobei sowohl in dem Gehäuseaußenrahmen (21) als auch in dem Stützträger (22) jeweils eine Dämpfungselement-Aufnahmenut (26) ausgebildet ist; das elastische Dämpfungselement (6) in der Dämpfungselement-Aufnahmenut (26) aufgenommen ist.

6. Das Batteriegehäuse gemäß Anspruch 1 oder 2, wobei die Batteriewannenhalterung (1), der Gehäuseaußenrahmen (21) und der Stützträger (22) gemeinsam einen Druckentlastungskanal begrenzen; in dem Gehäuseaußenrahmen (21) eine Druckentlastungskammer des Rahmens begrenzt ist; eine Seitenwand des Gehäuseaußenrahmens (21) mindestens eine Verbindungsöffnung begrenzt; der Druckentlastungskanal über die mindestens eine Verbindungsöffnung mit der Druckentlastungskammer des Rahmens verbunden ist; und ein Druckentlastungsventil an dem Gehäuseaußenrahmen (21) angeordnet ist.

7. Ein Batteriepack, **dadurch gekennzeichnet, dass** es Folgendes umfasst:
das Batteriegehäuse gemäß einem der Ansprüche 1 bis 6; und
ein Batteriemodul, das an der Batteriewannenhalterung (1) des Batteriegehäuses montiert und befestigt ist.

8. Das Batteriepack gemäß Anspruch 7, wobei das Batteriemodul Folgendes umfasst:
eine Modulpositionierungshalterung (5);
eine oder mehrere Zellen (4), wobei die eine oder die mehreren Zellen (4) gleichmäßig verteilt und in gleichen Abständen voneinander angeordnet sind; jede der einen oder der mehreren Zellen (4) in die Modulpositionierungshalterung (5) eingesetzt ist und jede der einen oder der mehreren Zellen (4) mit dem Druckentlastungskanal des Batteriegehäuses Wärme austauschen kann.

9. Eine elektrisch angetriebene Vorrichtung, **dadurch gekennzeichnet, dass** sie das Batteriepack gemäß Anspruch 7 oder 8 umfasst.

## Revendications

1. Un boîtier de batterie, **caractérisé en ce qu'**il comprend :
un support de bac de batterie (1) ;
un corps de boîtier (2), dans lequel le corps de boîtier (2) comporte un cadre extérieur du boîtier (21) et une poutre de support (22), le cadre extérieur du boîtier (21) délimitant un compartiment de batterie (23) à l'intérieur du cadre extérieur du boîtier (21), le cadre extérieur du boîtier (21) et/ou la poutre de support (22) délimitant une rainure coulissante anti-détachement (24), la poutre de support (22) étant fixée au cadre extérieur du boîtier (21) ; et
un élément de détachement couliss
ant (3), dans lequel l'élément de détachement coulissant (3) est disposé de manière coulissante dans la rainure coulissante anti-détachement (24), et une partie d'encliquetage anti-détachement (31) de l'élément de détachement coulissant (3) étant configurée pour retenir et fixer le support de bac de batterie (1) au cadre extérieur du boîtier (21) et à la poutre de support (22) ;
dans lequel le support de bac de batterie (1) délimite une rainure de positionnement et anti-détachement (15) ; la partie d'encliquetage anti-détachement (31) de l'élément de détachement coulissant (3) étant encliquetée dans la rainure de positionnement et anti-détachement (15).

2. Le boîtier de batterie selon la revendication 1, dans lequel un fond de la rainure coulissante anti-détachement (24) est pourvu d'une nervure de guidage (27) ; la nervure de guidage (27) s'étendant dans une direction longitudinale de la rainure coulissante anti-détachement (24) ; l'élément de détachement coulissant (3) délimitant une ouverture de guidage (34) coopérant de manière coulissante avec la nervure de guidage (27) ; et une extrémité de la nervure de guidage (27) située à proximité d'une ouverture d'extrémité de la rainure coulissante anti-détachement (24) étant pourvue d'une position de démontage (28).

3. Le boîtier de batterie selon la revendication 1 ou 2, dans lequel la rainure coulissante anti-détachement (24) présente une cavité d'extension (241) s'étendant dans une direction de largeur de la rainure coulissante anti-détachement (24) ; l'élément de détachement coulissant (3) comprenant en outre un corps de coulisseau (32) et une partie d'encliquetage d'extension (33) ; la partie d'encliquetage d'extension (33) faisant saillie depuis le corps de coulisseau (32) vers la cavité d'extension (241) ; la partie d'encliquetage anti-détachement (31) étant fixée au corps de coulisseau (32).

4. Le boîtier de batterie selon la revendication 1 ou 2, comprenant en outre un élément d'amortissement élastique (6), l'élément d'amortissement élastique (6) étant disposé entre le corps de boîtier (2) et le support de bac de batterie (1).

5. Le boîtier de batterie selon la revendication 4, dans lequel une rainure d'encastrement de l'élément d'amortissement (26) est ménagée respectivement dans le cadre extérieur du boîtier (21) et dans la poutre de support (22) ; l'élément d'amortissement élastique (6) étant encastré dans la rainure d'encastrement de l'élément d'amortissement (26).

6. Le boîtier de batterie selon la revendication 1 ou 2, dans lequel le support de bac de batterie (1), le cadre extérieur du boîtier (21) et la poutre de support (22) délimitent conjointement un canal de décompression ; une chambre de décompression du cadre est délimitée dans le cadre extérieur du boîtier (21) ; une paroi latérale du cadre extérieur du boîtier (21) délimite au moins un orifice de communication ; le canal de décompression communiquant avec la chambre de décompression du cadre par l'intermédiaire de ledit au moins un orifice de communication ; une soupape de décompression étant disposée sur le cadre extérieur du boîtier (21).

7. Un bloc-batterie, **caractérisé en ce qu'**il comprend :
le boîtier de batterie selon l'une quelconque des revendications 1 à 6 ; et
un module de batterie, monté et fixé sur le support de bac de batterie (1) du boîtier de batterie.

8. Le bloc-batterie selon la revendication 7, dans lequel le module de batterie comprend :
un support de positionnement du module (5) ;
une ou plusieurs cellules (4), dans lequel la ou les cellules (4) sont réparties uniformément à intervalles égaux ; chacune des cellules (4) étant insérée dans le support de positionnement du module (5), et chacune des cellules (4) étant apte à échanger de la chaleur avec le canal de décompression du boîtier de batterie.

9. Un appareil électrique, **caractérisé en ce qu'**il comprend le bloc-batterie selon la revendication 7 ou 8.
